# FASCICULE DE BREVET EUROPEEN

(11) **EP 2 143 082 B1**
(45) Date de publication et mention de la délivrance du brevet: **01.07.2020**
(21) Numéro de dépôt: 08787981.3
(22) Date de dépôt: 22.04.2008
(51) Int. Cl.: G07D 7/20, G07D 7/00

(54) **PROCEDE ET DISPOSITIF D'IDENTIFICATION D'OBJETS OU DOCUMENTS**
VERFAHREN UND VORRICHTUNG ZUR IDENTIFIKATION VON OBJEKTEN ODER DOKUMENTEN
METHOD AND DEVICE FOR IDENTIFYING OBJECTS OR DOCUMENTS

(30) Priorité: 27.04.2007 FR 0703146
(43) Date de publication de la demande: 13.01.2010
(73) Titulaire: Advanced Track And Trace, 92504 Rueil-Malmaison Cedex (FR)
(72) Inventeur: MASSICOT, Jean-Pierre, F-92504 Rueil-Malmaison Cedex (FR); FOUCOU, Alain, F-92504 Rueil-Malmaison Cedex (FR); SAGAN, Zbigniew, F-92504 Rueil-Malmaison Cedex (FR)
(74) Mandataire: Cornuejols, Georges
(86) Numéro de dépôt international: PCT/FR2008/000563
(87) Numéro de publication internationale: WO 2008/142307

(56) Documents cités:
- EP-A- 0 889 448
- WO-A-01/43086
- WO-A-2006/053685

## Description

La présente invention concerne un procédé et un dispositif d'identification d'objets ou documents. Elle s'applique, en particulier, à la traçabilité des objets et à la lutte contre la contrefaçon.

On connaît des procédés d'identification qui consistent à appliquer un code d'identification à chaque objet à identifier, par exemple sous la forme d'un code à barres. Cependant, ce code est facile à recopier et permet une contrefaçon par reproduction servile, quelle que soit la complexité du code utilisé pour représenter l'information originelle.

On connaît aussi des procédés de marquage anti-copie, par lesquels on forme, par exemple par l'impression d'un « digital watermark » (en français filigrane numérique) dissimulé dans une image ou d'une matrice de points contrastés imprimés en très petite dimension, une marque qui, si elle est copiée, présente une dégradation qui peut être détectée. Cependant, pour des moyens de marquage statiques (dans lesquels l'image ou la matrice de points ne peut varier à chaque impression), ces marques ne permettent pas d'identifier chaque objet individuellement.

On connait la demande de brevet internationale WO 0143086 qui divulgue un procédé de marquage d'une étiquette sur une surface de texture rugueuse dans lequel une image bidimensionnelle est imprimée sur une étiquette puis lue, des données à propos de l'image lue permettent de générer une clé d'encryptage desdites données pour former un code appliqué à l'étiquette.

On connait également la demande de brevet européenne EP 0889448 qui divulgue un procédé de vérification de la source d'un article fabriqué dans lequel une étiquette d'authentification est préparée et associé à l'article au moyen d'informations relatives à l'article.

La présente invention vise à remédier à ces inconvénients.

A cet effet, la présente invention vise, selon un premier aspect, un procédé de sécurisation tel que revendiqué par la revendication 1.

Grâce à ces dispositions, chaque produit possède une identification unique. De plus, le lien de dépendance de la marque d'identification avec la marque anti-copie peut être vérifié. En revanche, toute copie de ce document est détectable de deux manières : pour les copies serviles, du fait de la détérioration de la marque anti-copie et, pour les copies par reproduction, du fait de la disparition du lien de dépendance entre la marque anti-copie et la marque d'identification.

Selon des caractéristiques particulières, le procédé tel que succinctement exposé ci-dessus comporte une étape d'impression d'une zone uniforme et l'étape de marquage du document pour former la marque d'identification comporte une étape d'émission de lumière avec un laser, dans la zone uniforme.

Grâce à ces dispositions, le marquage de la marque d'identification est rapide et précis, et ne nécessite pas l'usage d'une imprimante sur la chaîne de production.

Selon des caractéristiques particulières, l'étape de marquage du document comporte une étape de détection de l'arrivée de la zone uniforme en regard dudit laser.

Grâce à ces dispositions, le marquage de la marque d'identification peut être réalisé sur une machine indépendante de la chaîne d'impression avec laquelle sont réalisées la marque anti-copie et la zone uniforme.

Selon des caractéristiques particulières, au cours de l'étape de génération de la marque d'identification, on met en œuvre un nombre aléatoire ou pseudo-aléatoire.

Selon des caractéristiques particulières, le procédé objet de la présente invention, tel que succinctement exposé ci-dessus, comporte, en outre, une étape de marquage invisible de la marque d'identification sur ledit document.

Selon des caractéristiques particulières, le procédé objet de la présente invention, tel que succinctement exposé ci-dessus, comporte, en outre, une étape de lecture de la marque d'identification et une étape de vérification de la qualité de la marque d'identification lue.

Grâce à ces dispositions, la qualité de chaque document est vérifiée et tous les documents mis en circulation bénéficient de la protection conférée par la mise en œuvre de la présente invention.

Selon des caractéristiques particulières, la marque d'identification est de nature textuelle, c'est-à-dire lisible par l'humain. La saisie et l'interprétation de la marque d'identification sont ainsi facilitées.

Selon des caractéristiques particulières, la marque d'identification possède également une propriété anticopie. La sécurité du document est ainsi renforcée.

La présente invention vise, selon un deuxième aspect, un dispositif de sécurisation tel que revendiqué dans la revendication 12.

La présente invention vise, selon un troisième aspect, un procédé de vérification d'identification de tel que revendiqué dans la revendication 13.

La présente invention vise, selon un quatrième aspect, un dispositif de vérification d'identification de documents tel que revendiqué par la revendication 14.

Les avantages, buts et caractéristiques particulières de ce dispositif d'identification, de ce procédé de vérification d'identification et de ce dispositif de vérification d'identification étant similaires à ceux du procédé d'identification objet de la présente invention, tel que succinctement exposé ci-dessus, ils ne sont pas rappelés ici.

D'autres avantages, buts et caractéristiques de la présente invention ressortiront de la description qui va suivre, faite, dans un but explicatif et nullement limitatif, en regard des dessins annexés, dans lesquels :
- la figure 1 représente, schématiquement et en élévation, un mode de réalisation particulier du dispositif objet de la présente invention,
- la figure 2 représente, sous forme d'un logigramme, des étapes d'un mode de réalisation particulier du procédé d'identification objet de la présente invention,
- la figure 3 représente, sous forme d'un logigramme, des étapes d'un mode de réalisation particulier du procédé de vérification d'identification objet de la présente invention et
- la figure 4 représente, schématiquement, un exemple de document réalisé par la mise en œuvre du procédé ou du dispositif objet de la présente invention.

Avant de donner le détail de différents modes de réalisation particuliers de la présente invention, on donne, ci-après, des définitions qui seront utilisées dans la description.
- « matrice d'informations » : il s'agit d'une représentation physique d'un message, généralement apposée sur une surface unie (à la différence des watermarks ou filigranes numériques qui modifient les valeurs de pixels d'un décor à imprimer), lisible par une machine (en anglais « machine-readable représentation of information »). La définition de la matrice d'informations englobe, par exemple, les codes à barres 2D, les codes à barres à une dimension et d'autre moyens de représentation de l'information qui sont moins intrusifs, tel que les « Dataglyphs » (marquage de données) ;
- « cellule » : il s'agit d'un élément de la matrice d'information qui représente une unité d'information ;
- « document » : il s'agit de n'importe quel objet (physique) portant une matrice d'information ;
- « marquage » ou « impression » : tout processus par laquelle on passe d'une image digitale (incluant une matrice d'information, un document..) à sa représentation dans le monde réel, cette représentation étant généralement faite sur une surface : ceci inclut, de manière non-exclusive, l'impression à jet d'encre, laser, offset, thermique, ainsi que l'embossage, la gravure laser, la génération d'hologrammes. Des processus plus complexes, tel que le moulage, dans lequel la matrice d'information est d'abord gravée dans le moule, puis moulée sur chaque objet, sont également inclus (notons qu'une matrice d'information « moulée » peut être vue comme ayant trois dimensions dans le monde physique même si sa représentation digitale en comporte deux. Notons encore que plusieurs des procédés mentionnés incluent plusieurs transformation, par exemple l'impression offset classique (contrairement au offset « computer-to-plate »), inclut la création d'un film, ledit film sevrant a créer une plaque, ladite plaque étant utilisée dans l'impression. D'autres procédés permettent également d'imprimer une information dans le domaine non-visible, soit en utilisant des fréquences à l'extérieur du spectre visible, ou encore à inscrivant l'information à l'intérieur de la surface, etc, et
- « capture » : tout processus par lequel on obtient une représentation digitale du monde réel, incluant la représentation digitale d'un document physique contenant une matrice d'information.

En guise d'introduction à la description de modes de réalisation particuliers du procédé et du dispositif objets de la présente invention, on rappelle que la dégradation d'une matrice d'information a pour conséquence que les contenus de certaines cellules peuvent ne pas être correctement décodés.

Chaque étape de la création de la matrice d'information est effectuée dans le but que le message d'origine soit lisible sans erreur, même si, et c'est un effet désiré, la lecture initiale de la matrice d'information est entachée d'erreurs. En particulier, un des buts de cette création de matrice d'information est d'utiliser le nombre ou le taux d'erreurs des messages encodés, répliqués, permutés ou brouillés pour déterminer l'authenticité d'une marque de la matrice d'information et donc du document qui la porte.

En effet, le taux de cette dégradation peut être ajusté en fonction des caractéristiques de l'impression, de telle sorte que la production d'une copie entraîne des erreurs supplémentaires, résultant en un taux d'erreur en moyenne plus élevé lors de la lecture d'une copie, que lors de la lecture d'un original.

Pour comprendre pourquoi une mesure du taux d'erreurs du message peut suffire à déterminer si un document est un original ou une copie, une analogie avec les systèmes de communication s'avère utile. En effet, le passage du message codé, brouillé à la matrice d'information qui le représente n'est autre qu'une modulation du message, cette modulation étant définie comme le processus par lequel le message est transformé de sa forme originale en une forme adaptée à la transmission sur un canal. Ce canal de communication, soit le média de transmission d'information qui relie la source au destinataire et permet l'acheminement du message, diffère selon que la matrice d'information captée est une matrice d'information originale captée ou une matrice d'information copiée captée. Le canal de communication peut varier : on distingue ainsi le « canal de communication d'un original » et le « canal de communication d'une copie ». Cette différence peut se mesurer en terme de rapport signal/bruit, ce rapport étant plus faible pour une matrice d'information copiée captée.

Le message codé extrait d'une matrice d'information copiée captée aura plus d'erreurs que le message codé extrait d'une matrice d'information originale captée. Le nombre ou le taux d'erreurs détectés sont, conformément à la présente invention, utilisés pour différencier une copie d'un original.

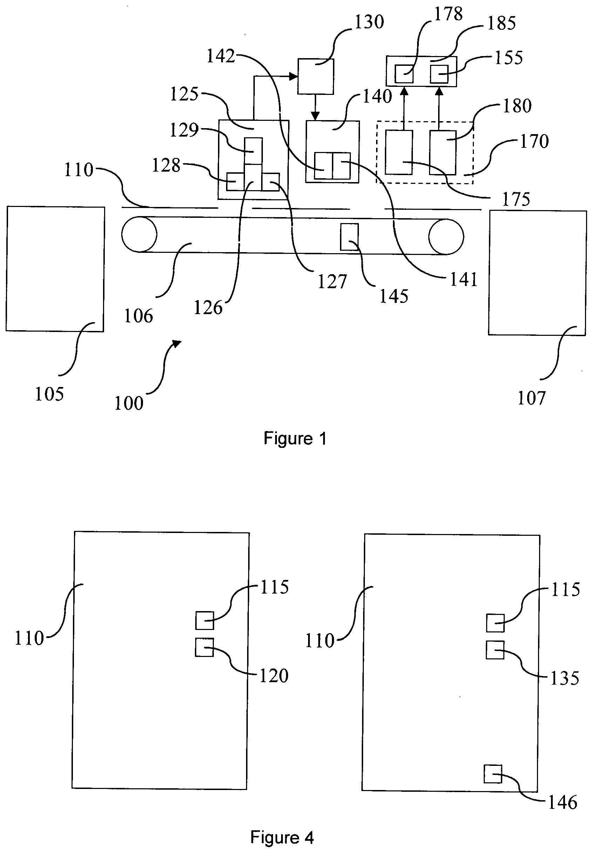

On observe, en figure 1, un mode de réalisation du dispositif d'identification 100 objet de la présente invention adapté à une machine traitant des documents qui ont pu être imprimés en d'autres sites ou à d'autres dates. Dans d'autres modes de réalisation, ce dispositif 100 objet de la présente invention est adapté à une chaîne d'impression et traite les documents dès leur impression initiale.

Le dispositif d'identification de documents 100 comporte :
- un dépileur 105, connu en soi, qui dépile des documents 110 (voir figure 4) portant, d'une part, une marque anti-copie 115, généralement identique sur tous les documents 110 et, d'autre part, une zone imprimée 120, généralement de couleur uniforme, par exemple noire,
- un convoyeur 106, de type connu,
- un empileur 107 qui forme une pile des documents 110 traités par le dispositif 100,
- un moyen 125 de lecture de la marque anti-copie 115 formée sur chaque document 110,
- un moyen 130 de génération d'une marque d'identification 135, variable d'un document à un autre et fonction de la lecture de la marque anti-copie 115 et
- un moyen 140 de marquage de chaque document 110 pour former ladite marque d'identification 135 correspondant, individuellement au dit document 110.

On observe aussi, en figure 1, un dispositif 170 de vérification d'identification de documents 110, qui comporte :
- un moyen 175 de lecture de la marque anti-copie 115 formée sur un document 110,
- un moyen 180 de lecture d'une marque d'identification 135 et
- un moyen 185 de détermination si la marque anti-copie 115 et la marque d'identification 135 présentent une relation prédéterminée.

Dans le cas où la présente invention est adaptée à une chaîne d'impression, le dépileur 105 est en amont de la chaîne d'impression et ce n'est qu'après impression que les documents 110 portent, d'une part, une marque anti-copie 115, et, d'autre part, une zone imprimée 120.

Dans chacun des deux cas mentionnés ci-dessus, on prépare une zone de marquage laser sur le document 110 en imprimant un aplat 120, par exemple un carré noir de 3,2 ou de 5 mm. de coté, à proximité de la marque anti-copie 115. Cet ajout est, par exemple, effectué au cours du processus d'impression analogique, par exemple offset, du document 110. Ce processus d'impression est réalisé à grande vitesse en reproduisant toujours la même image, y compris la marque anti-copie 115 et l'aplat uniforme 120, sur chaque document 110. Dans le cas où les documents sont destinés à former des étuis, les documents 110 sont ensuite découpés à l'unité puis acheminés jusqu'au dépileur 105.

Le moyen 125 de lecture de la marque anti-copie 115 comporte une caméra 126 et au moins une source de lumière 127, ainsi qu'un moyen de détection 128 d'arrivée d'un document 110, par exemple une cellule opto-électronique placée, sur le chemin suivi par les documents, en amont du moyen de lecture 125. Dans des modes de réalisation, on met en œuvre deux cellules photosensibles, l'une pour détecter l'arrivée du document 110 et l'autre, synchronisée par la première, de détection d'arrivée d'un aplat 120.

Le moyen de lecture 125 comporte aussi un moyen de traitement 129 de l'image captée par la caméra 126, qui détermine des caractéristiques de l'image de la marque anti-copie 115. Ainsi, pour réaliser l'appairage entre la valeur cachée de la marque anti-copie 115 et d'une marque d'identification 135 qui va être générée individuellement pour chaque document 110, un système de vision lit en dynamique la valeur de la marque anti-copie 115 puis transmet l'information au moyen de génération 130 de la marque d'identification 135.

Pour assurer le positionnement précis de la marque d'identification dans la zone de marquage pré-imprimée 120, le système de vision calcule le positionnement selon deux axes orthogonaux et l'orientation angulaire de la zone 120, par rapport à l'axe du convoyeur 106, en dynamique et fournit ces coordonnées au moyen de marquage 140.

Le moyen 130 de génération d'une marque d'identification 135, variable d'un document à un autre et fonction de la lecture de la marque anti-copie 115. Dans des modes de réalisation, pour la génération de la marque d'identification 135, le moyen de génération 130 met en œuvre un nombre aléatoire ou pseudo-aléatoire.

Comme exposé ci-dessus, une valeur individuelle est insérée dans chaque marque d'identification 135 et dépend de l'impression de la marque anti-copie 115. Après lecture d'au moins un sous-ensemble des informations de la marque anti-copie 115 (Si la lecture échoue, on déclenche le retrait du document, comme exposé ci-dessous), le moyen 130 génère une marque d'identification 135 à partir du sous-ensemble lu des informations de la marque anti-copie 115, et, optionnellement, d'un code unique, d'un horodatage et/ou d'une ou plusieurs clé de chiffrement, ensemble ou séparément appelés « valeur associative » dans la suite de la description.

La valeur associative, insérée dans la marque d'identification 135, est propre à chaque marque d'identification générée. Le déroulement des étapes lors de la génération et le marquage de la marque d'identification 135 associée à la marque anti-copie 115 est, dans des modes de réalisations particuliers, le suivant :
- capture d'une image de la marque anticopie 115 d'un document,
- lecture d'au moins un sous-ensemble des informations de la marque anti-copie 115,
- si la lecture échoue, on arrête la production car on ne peut générer de marque d'identification associée à la marque anticopie,
- génération de la marque d'identification 135 à partir du sous-ensemble lu des informations de la marque anticopie 115, et des informations optionnelles (code unique, horodatage et/ou une ou plusieurs clé(s) de chiffrement) et
- impression de la marque d'identification 135 sur le document portant la marque anti-copie 115 correspondante.

On donne, ci-dessous, un exemple de méthode pour la génération de la marque d'identification 135.
- à partir du sous-ensemble « ICNA » des informations de la marque anticopie 115, on calcule la valeur associative « VA » par une fonction de calcul de valeur associative « F », ou d'une fonction « F' » qui utilise optionnellement un ou plusieurs autres paramètres dénotés « K »,
- on obtient un horodatage « T »,
- on obtient un identifiant « ID » de la machine génératrice de marques d'identification,
- on obtient un code «IDA», par exemple d'une machine génératrice de codes aléatoires (En variante, on obtient un code sérialisé),
- on obtient une clé de chiffrement « KCV » de la marque d'identification,
- avec une fonction « CONC », on concaténe, de préférence en représentation binaire, « VA », « T », « ID » et « IDA » pour obtenir la concaténation « C »,
- on chiffre la concaténation « C » avec une fonction de chiffrement « ENCRYPT » et la clé de chiffrement KCV, pour obtenir « CENC »,
- on construit la marque d'identification 135, à partir de la concaténation chiffrée « CENC », en utilisant une fonction de modulation de code variable « MODCV ».

Schématiquement, les étapes peuvent s'exprimer ainsi :
VA=F(ICNA) ou VA=F'(ICNA, K)
C=CONC(VA,ID,T,IDA)
CENC=ENCRYPT(C,KCV)
CV=MODCV(CENC)
Nous décrivons maintenant les choix possibles ainsi que les variantes pour les fonctions « F », « F' », « CONC », « ENCRYPT » et « MODCV ».

En ce qui concerne la fonction « F », celle-ci est, de façon non limitative, une fonction qui calcule une valeur « VA » à partir d'une valeur « ICNA » portée par la marque anti-copie 115 ou d'un sous-ensemble de cette valeur. Par exemple, si la valeur portée par la marque anti-copie 115 possède une taille de huit octets, dont les quatre derniers octets sont peu utiles car ils contiennent des données génériques, et les quatre premiers octets contiennent un identifiant de la marque anti-copie, on peut simplement attribuer ces quatre octets à la valeur «VA». Dans ce cas, « VA=ICNA >>32 » (>> indique un décalage de bit, ou « bitshift » en anglais), ou « F » est la fonction « >>32 ». Alternativement, la fonction « F » peut être une fonction de hachage, par exemple de type connu sous le nom de « SHA-1 », « SHA-256 » ou « MD5 ». La fonction « F » calcule alors le hachage de la valeur portée par la marque anti-copie 115, et si des contraintes de volume de données s'appliquent, conserve un sous-ensemble du résultat, par exemple les quatre premiers octets.

En ce qui concerne la fonction « F' », dans le cas où on utilise la fonction « F' » avec paramètre(s) « K », « F' » peut être, par exemple, une fonction de chiffrement (par exemple connue sous le nom de « Triple-DES » ou d' «AES »). «F'» peut également être une fonction de hachage telle que celles citées précédemment, en combinaison avec une clé, ici le paramètre « K » qui doit être tenu secret.

Une variante consiste, si une méthode de caractérisation unitaire est appliquée à la marque anti-copie, afin d'en extraire une empreinte «E », les fonctions « F » et « F' » incluent « E », et on a « VA=F(E ,ICNA) » et « VA=F'(E,ICNA,K) ».

En ce qui concerne la fonction « CONC », les valeurs « VA », « T », « ID », « IDA » peuvent être des entiers ou avoir une valeur appartenant à un ensemble déterminé (par exemple il existe quatre machines génératrices de marques d'identification 135, donc quatre valeurs possibles pour « ID »). Dans le second cas, on détermine le nombre de bits nécessaires pour représenter l'ensemble des valeurs possibles. Dans le premier, les entiers sont en général représentés sur un ensemble déterminé d'octets.

En ce qui concerne la fonction « ENCRYPT », elle peut être une fonction de chiffrement symétrique, par exemple connus sous le nom de «Triple DES », «AES» ou « RC4 » ou une fonction de chiffrement asymétrique, par exemple connue sous le nom de « RSA ».

En ce qui concerne la fonction « MODCV », c'est, en général, une fonction de génération de code barre en deux dimensions, les codes barres en une dimension ayant une capacité d'information limitée. On note que les « Datamatrix » (marque déposée) sont des codes barre 2D à haute capacité d'information, très utilisés et qui, en conséquence, peuvent être mis en œuvre pour générer la marque d'identification 135. La fonction « MODCV » peut également être une fonction génératrice de matrice d'information sécurisée, qui nécessite une ou plusieurs clés de chiffrement et brouillage. On note, dans ce cas, que la fonction « ENCRYPT » n'est pas nécessaire, le chiffrement étant intrinsèque à la génération de la marque d'identification 135.

Dans des variantes, la fonction « MODCV » est une fonction de génération d' un marquage en clair, tel un texte.

Dans les variantes où la fonction « MODCV » est une fonction de génération d'une matrice d'information sécurisée, cette matrice d'information est, en partie, naturellement dégradée lors de son impression de telle sorte qu'elle a des propriétés authentifiantes.

Le moyen 140 de marquage de chaque document 110 pour former la marque d'identification 135 qui correspond individuellement à ce document 110 comporte, dans un mode de réalisation, une source laser 141 et au moins un miroir galvanométrique 142. Préférentiellement, la source laser produit un faisceau laser femtoseconde, permettant un marquage plus rapide, grâce à un rayonnement plus puissant et dont la fréquence de modulation est plus élevée. En variante, la source laser 141 est associée à un modulateur optique matriciel, ou valve optique, par exemple à écran à cristaux liquides matriciel. On note que le laser fait une abrasion locale de l'encre de l'aplat imprimé 120.

Dans le mode de réalisation illustré en figure 1, le dispositif 100 comporte, en outre, un moyen de marquage 145 d'une deuxième marque d'identification 146 sur le document 100, en une autre position que la position où se trouvent la marque anti-copie et la marque d'identification 135, par exemple au verso du document 100. Par exemple, on utilise, à cet effet, un laser de faible puissance, avec ou sans pré-impression d'une zone uniforme, ou une encre invisible dans le domaine visible et visible dans le domaine infrarouge. La deuxième marque d'identification 146 est, éventuellement, identique à la première marque d'identification 135.

Dans le mode de réalisation illustré en figure 1, le moyen 180 de lecture de la marque d'identification 135, qui comporte une caméra et au moins une source de lumière (non représentées) est associé à un moyen 155 de vérification de la qualité de la marque d'identification lue et à un moyen de retrait (non représenté) de chaque document 100 portant une marque d'identification 135 de mauvaise qualité. Ainsi, la qualité de chaque document est vérifiée et tous les documents mis en circulation bénéficient de la protection conférée par la mise en œuvre de la présente invention. Le résultat de la vérification effectuée par le moyen de vérification 180 est transmis, pour stockage et exploitation ultérieure à un superviseur (non représenté).

Le moyen de retrait de chaque document 100 portant une marque d'identification 135de mauvaise qualité est, par exemple, constitué d'une « écluse », c'est-à-dire d'un volet commandé pour, dans l'une de ses positions, faire tomber les documents dans une poubelle et, dans une autre position, laisser passer les document vers l'empileur 107.

Le moyen 175 de lecture de la marque anti-copie 115 formée sur un document 110, comporte une caméra et au moins une source de lumière et est associé à un moyen de traitement 178 de l'image captée par cette caméra, qui détermine des caractéristiques de l'image de la marque anti-copie 115, selon des techniques connues en soi, dans le domaine des marquages anti-copies.

Le moyen 185 de détermination si la marque anti-copie 115 et la marque d'identification 135 présentent une relation prédéterminée effectue la vérification de validité d'un document :
- à partir d'une image, il lit la marque d'identification « CV' » correspondant à la marque d'identification 135 « CV »,
- avec une fonction « DEMOD », il traite « CV' » pour obtenir une valeur « CENC' » correspondant à la valeur « CENC »,
- il effectue un déchiffrement de « CENC' » avec une fonction « DECRYPT » inverse de la fonction « ENCRYPT », ainsi qu'avec une clé de déchiffrement « KCV' », pour obtenir la concaténation décryptée « C' », correspondant à « C ». On note que, pour les méthodes de chiffrement symétrique, «KCV'» est égal à « KCV », mais « KCV » et « KCV' » sont différents pour les méthodes de chiffrement asymétriques.
- il déconcatène la valeur « C' » avec une fonction « DECONC » inverse de la fonction «CONC», pour obtenir des valeurs «VA'», «ID'», « T' » et « IDA' » correspondant respectivement aux valeurs « VA », « ID », « T » et « IDA »,
- il effectue la lecture du contenu de la marque anti-copie 115, avec une fonction « READCNA » et extrait la valeur « ICNA »,
- il détermine si la marque anti-copie correspond à un original ou à une copie, avec une fonction « AUTH » et
- il calcule « VA"=F(ICNA) » ou « VA"=F'(ICNA,K) ».

Il y alors quatre cas de figure possibles :
- soit « VA"=VA' » et « AUTH(CNA)=ORIG », auquel cas le document est validé,
- soit « VA"=VA' » et « AUTH(CNA)=COPY », auquel cas le document est une copie d'un document valide,
- soit « VA"#VA' » et « AUTH(CNA)=ORIG », auquel cas le document est un original volé, sur lequel a été apposé une marque d'identification 135 « CV » non-conforme,
- soit « VA"#VA' » et « AUTH(CNA)=COPY », auquel cas le document est une reproduction.

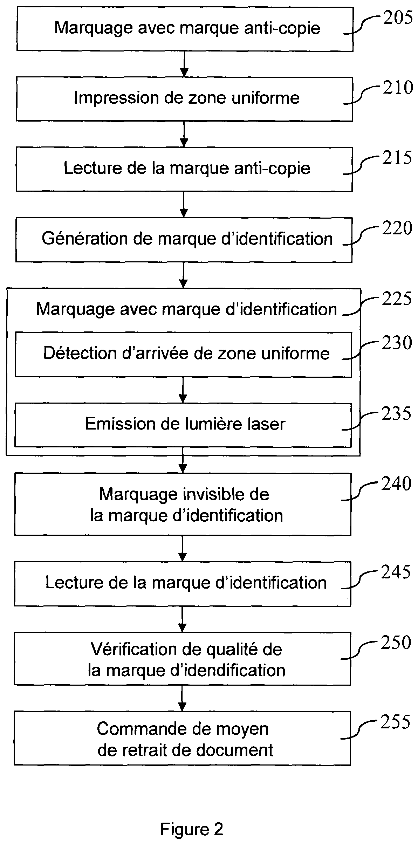

On observe, en figure 2 que le procédé d'identification d'un document objet de la présente invention comporte, d'abord, une étape 205 de marquage du document avec une marque anti-copie identique pour une pluralité de documents.

Parallèlement à l'étape 205, au cours d'une étape 210, on effectue une étape d'impression d'une zone uniforme.

Puis, au cours d'une étape 215, on effectue la lecture de la marque anti-copie. Au cours de cette étape, on vérifie la qualité de la marque anti-copie.

Au cours d'une étape 220, on effectue une génération d'une marque d'identification variable d'un document à un autre et fonction de la lecture de la marque anti-copie. Par exemple, au cours de l'étape 220 de génération de la marque d'identification, on met en œuvre un nombre aléatoire ou pseudo-aléatoire.

Au cours d'une étape 225, on effectue le marquage du document pour former la marque d'identification sur ledit document. L'étape 225 comporte :
- une étape 230 de détection de l'arrivée de la zone uniforme en regard dudit laser et
- une étape 235 d'émission de lumière avec un laser, dans la zone uniforme.

Au cours d'une étape 240, on effectue un marquage invisible de la marque d'identification sur le document.

Au cours d'une étape 245, on effectue une lecture de la marque d'identification et, au cours d'une étape 250, on effectue une vérification de la qualité de la marque d'identification lue.

En fonction du résultat de l'étape 250, au cours d'une étape 255, on conserve ou on retire le document du flux de production afin que toutes les marques d'identification des documents restant dans le flux présentent une qualité suffisante.

Le contenu de chacune des étapes illustrées en figure 2 étant détaillé en regard de la figure 1, il n'est pas rappelé ici.

Grâce à la mise en œuvre de la présente invention, chaque document ou produit possède une identification facile à lire. De plus, le lien de dépendance de la marque d'identification avec la marque anti-copie peut être vérifié. En revanche, toute copie de ce document est détectable de deux manières : d'une part, du fait de la détérioration de la marque anti-copie et, d'autre part, du fait de la disparition du lien de dépendance entre la marque anti-copie et la marque d'identification.

De plus, le marquage de la marque d'identification est rapide et précis, et ne nécessite pas l'usage d'une imprimante sur la chaîne de production. Il peut être réalisé sur une machine indépendante de la chaîne d'impression avec laquelle sont réalisées la marque anti-copie et la zone uniforme.

La qualité de chaque document est vérifiée et tous les documents mis en circulation bénéficient de la protection conférée par la mise en œuvre de la présente invention.

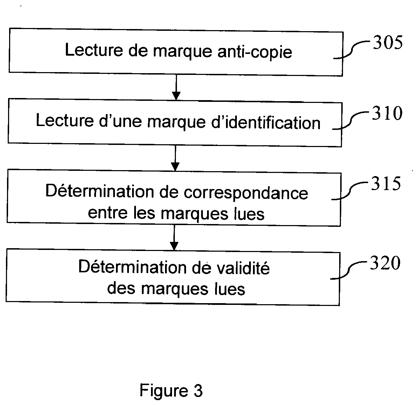

On observe, en figure 3, que le procédé de vérification d'identification d'un document comporte :
- une étape 305 de lecture d'une marque anti-copie formée sur un document,
- une étape 310 de lecture d'une marque d'identification variable d'un document à un autre,
- une étape 315 de détermination si la marque anti-copie et la marque d'identification présentent une relation prédéterminée et
- une étape 320 de détermination de la validité de la marque anti-copie et de la marque d'identification.

Chacune des étapes illustrées en figure 3 étant détaillée en regard de la figure 1, leur description n'est pas recopiée ici.

## Revendications

1. Procédé de sécurisation de documents, **caractérisé en ce qu'**il comporte :
- une étape de marquage du document avec une zone de marquage pré-imprimée et une marque anti-copie identique pour une pluralité de documents, la marque anti-copie comportant des informations,
- une étape de lecture d'une marque anti-copie pour obtenir une valeur représentative d'au moins une partie des informations de la marque anti-copie,
- une étape de génération d'une marque d'identification variable d'un document à un autre et fonction de ladite valeur obtenue par de la lecture de la marque anti-copie, l'étape de génération est effectuée par concaténation, chiffrement et modulation d'au moins la valeur obtenue,
- une étape de calcul d'une position dans la zone de marquage pré-imprimée et
- une étape de marquage dudit document, à la position calculée, pour former ladite marque d'identification sur ledit document.

2. Procédé selon la revendication 1, dans lequel au cours de l'étape de génération, la valeur est obtenue à partir d'une partie des informations de la marque anti-copie et d'au moins un autre paramètre.

3. Procédé selon la revendication 2, dans lequel au moins un autre paramètre est un horodatage.

4. Procédé selon la revendication 1, dans lequel ladite valeur est calculée au moyen d'un sous-ensemble des informations.

5. Procédé selon la revendication 1, **caractérisé en ce qu'**il comporte une étape d'impression d'une zone uniforme et l'étape de marquage du document pour former la marque d'identification comporte une étape d'émission de lumière avec un laser, dans la zone uniforme.

6. Procédé selon la revendication 5, **caractérisé en ce que** l'étape de marquage du document comporte une étape de détection de l'arrivée de la zone uniforme en regard dudit laser.

7. Procédé selon l'une quelconque des revendications 1 à 6, **caractérisé en ce que**, au cours de l'étape de génération de la marque d'identification, on met en œuvre un nombre aléatoire ou pseudo-aléatoire

8. Procédé selon l'une quelconque des revendications 1 à 7, **caractérisé en ce qu'**il comporte, en outre, une étape de marquage invisible de la marque d'identification sur ledit document.

9. Procédé selon l'une quelconque des revendications 1 à 8, **caractérisé en ce qu'**il comporte, en outre, une étape de lecture de la marque d'identification et une étape de vérification de la qualité de la marque d'identification lue.

10. Procédé selon l'une quelconque des revendications 1 à 9, **caractérisé en ce que** la marque d'identification est de nature textuelle, c'est-à-dire lisible par l'humain.

11. Procédé selon l'une quelconque des revendications 1 à 10, **caractérisé en ce que** la marque d'identification possède également une propriété anticopie.

12. Dispositif de sécurisation de documents, **caractérisé en ce qu'**il comporte :
- un moyen de marquage du document avec une zone de marquage pré-imprimée et une marque anti-copie identique pour une pluralité de documents, la marque anti-copie comportant des informations,
- une caméra et un moyen de traitement d'au moins une image capté par la caméra pour lire une marque anti-copie pour obtenir une valeur représentative d'au moins une partie des informations de la marque anti-copie,
- un moyen de génération d'une marque d'identification variable d'un document à un autre et fonction de ladite valeur obtenue par de la lecture de la marque anti-copie, l'étape de génération est effectuée par concaténation, chiffrement et modulation d'au moins la valeur obtenue,
- un moyen de calcul d'une position dans la zone de marquage pré-imprimée et
- un moyen de marquage dudit document, à la position calculée, pour former ladite marque d'identification sur ledit document.

13. Procédé de vérification d'identification de documents, **caractérisé en ce qu'**il comporte :
- une étape de lecture une marque anti-copie formée sur un document,
- une étape de lecture, sur ledit document, d'une marque d'identification variable d'un document à un autre et
- une étape de détermination si la marque anti-copie lue et la marque d'identification lue présentent une relation prédéterminée par démodulation, décryptions et déconcaténation de la marque d'identification et comparaison avec au moins une valeur représentative de la marque anti-copie.

14. Dispositif de vérification d'identification de documents, **caractérisé en ce qu'**il comporte :
- une caméra et un moyen de traitement d'au moins une image capté par la caméra pour lire une marque anti-copie formée sur un document et d'une marque d'identification variable d'un document à un autre et
- un moyen de détermination si la marque anti-copie lue et la marque d'identification lue présentent une relation prédéterminée par démodulation, décryptions et déconcaténation de la marque d'identification et comparaison avec au moins une valeur représentative de la marque anti-copie

## Patentansprüche

1. Verfahren zur Sicherung von Dokumenten, **dadurch gekennzeichnet, dass** es aufweist:
- einen Schritt des Markierens des Dokuments mit einer vorgedruckten Markierungszone und einer identischen Anti-Kopie-Marke für eine Vielzahl von Dokumenten, wobei die Anti-Kopie-Marke Informationen aufweist,
- einen Schritt des Lesens einer Anti-Kopie-Marke, um einen repräsentativen Wert mindestens eines Teils der Informationen der Anti-Kopie-Marke zu erhalten,
- einen Schritt des Erzeugens einer von einem Dokument zu einem anderen variablen Identifikationsmarke in Abhängigkeit von dem durch das Lesen der Anti-Kopie-Marke erhaltenen Wertes, wobei der Schritt des Erzeugens durch Verketten, Chiffrieren und Modulieren von mindestens dem erhaltenen Wert durchgeführt wird,
- einen Schritt des Berechnens einer Position in der vorgedruckten Markierungszone und
- einen Schritt des Markierens des Dokuments an der berechneten Position, um die Identifikationsmarke auf dem Dokument zu bilden.

2. Verfahren nach Anspruch 1, wobei während des Schritts des Erzeugens der Wert auf der Basis von einem Teil der Informationen der Anti-Kopie-Marke und von mindestens einem anderen Parameter erhalten wird.

3. Verfahren nach Anspruch 2, wobei mindestens ein anderer Parameter eine Zeitstempelung ist.

4. Verfahren nach Anspruch 1, wobei der Wert mittels einer Untergruppe der Informationen berechnet wird.

5. Verfahren nach Anspruch 1, **dadurch gekennzeichnet, dass** es einen Schritt des Druckens einer gleichmäßigen Zone aufweist und der Schritt des Markierens des Dokuments, um die Identifikationsmarke zu bilden, einen Schritt des Sendens von Licht mit einem Laser in die gleichmäßige Zone aufweist.

6. Verfahren nach Anspruch 5, **dadurch gekennzeichnet, dass** der Schritt des Markierens des Dokuments einen Schritt des Detektierens der Ankunft der gleichmäßigen Zone gegenüber dem Laser aufweist.

7. Verfahren nach einem der Ansprüche 1 bis 6, **dadurch gekennzeichnet, dass** während des Schritts des Erzeugens der Identifikationsmarke eine Zufallszahl oder Pseudo-Zufallszahl zur Anwendung kommt.

8. Verfahren nach einem der Ansprüche 1 bis 7, **dadurch gekennzeichnet, dass** es ferner einen Schritt des unsichtbaren Markierens der Identifikationsmarke auf dem Dokument aufweist.

9. Verfahren nach einem der Ansprüche 1 bis 8, **dadurch gekennzeichnet, dass** es ferner einen Schritt des Lesens der Identifikationsmarke und einen Schritt des Überprüfens der Qualität der gelesenen Identifikationsmarke aufweist.

10. Verfahren nach einem der Ansprüche 1 bis 9, **dadurch gekennzeichnet, dass** die Identifikationsmarke textueller Art ist, das heißt, von dem Menschen lesbar.

11. Verfahren nach einem der Ansprüche 1 bis 10, **dadurch gekennzeichnet, dass** die Identifikationsmarke ebenfalls eine Anti-Kopie-Eigenschaft besitzt.

12. Vorrichtung zur Sicherung von Dokumenten, **dadurch gekennzeichnet, dass** sie aufweist:
- ein Mittel zum Markieren des Dokuments mit einer vorgedruckten Markierungszone und einer identischen Anti-Kopie-Marke für eine Vielzahl von Dokumenten, wobei die Anti-Kopie-Marke Informationen aufweist,
- eine Kamera und ein Verarbeitungsmittel von mindestens einem von der Kamera aufgenommenen Bild, um eine Anti-Kopie-Marke zu lesen, um einen repräsentativen Wert mindestens eines Teils der Informationen der Anti-Kopie-Marke zu erhalten,
- ein Mittel zum Erzeugen einer von einem Dokument zu einem anderen variablen Identifikationsmarke in Abhängigkeit von dem durch das Lesen der Anti-Kopie-Marke erhaltenen Wertes, wobei der Schritt des Erzeugens durch Verketten, Chiffrieren und Modulieren von mindestens dem erhaltenen Wert durchgeführt wird,
- ein Mittel zum Berechnen einer Position in der vorgedruckten Markierungszone und
- ein Mittel zum Markieren des Dokuments an der berechneten Position, um die Identifikationsmarke auf dem Dokument zu bilden.

13. Verfahren zum Überprüfen von Dokumentenidentifikation, **dadurch gekennzeichnet, dass** es aufweist:
- einen Schritt des Lesens einer auf einem Dokument gebildeten Anti-Kopie-Marke,
- einen Schritt des Lesens auf dem Dokument einer von einem Dokument zu einem anderen variablen Identifikationsmarke und
- einen Schritt des Bestimmens, ob die gelesene Anti-Kopie-Marke und die gelesene Identifikationsmarke ein vorher festgelegtes Verhältnis aufweisen, durch Demodulieren, Entschlüssen und Entketten der Identifikationsmarke und Vergleichen mit mindestens einem repräsentativen Wert der Anti-Kopie-Marke.

14. Vorrichtung zum Überprüfen von Dokumentenidentifikation, **dadurch gekennzeichnet, dass** sie aufweist:
- eine Kamera und ein Verarbeitungsmittel von mindestens einem von der Kamera aufgenommenen Bild, um eine Anti-Kopie-Marke zu lesen, die auf einem Dokument gebildet ist, und von einer von einem Dokument zu einem anderen variablen Identifikationsmarke,
- ein Mittel zum Bestimmen, ob die gelesene Anti-Kopie-Marke und die gelesene Identifikationsmarke ein vorher festgelegtes Verhältnis aufweisen, durch Demodulieren, Entschlüssen und Entketten der Identifikationsmarke und Vergleichen mit mindestens einem repräsentativen Wert der Anti-Kopie-Marke.

## Claims

1. Method for securing documents, **characterized in that** it comprises:
- a step of marking the document with a pre-printed marking area and an anti-copy mark that is identical for a plurality of documents, the anti-copy mark comprising information;
- a step of reading an anti-copy mark for obtaining a value representative of at least one portion of the information of the anti-copy mark;
- a step of generating an identification mark that can vary from one document to another and according to said value obtained from reading the anti-copy mark, the generation step being carried out through concatenation, encryption and modulation of at least the value obtained;
- a step of calculating a position in the pre-printed marking area; and
- a step of marking said document, at the calculated position, to form said identification mark on said document.

2. Method according to claim 1, wherein, during the generation step, the value is obtained from one portion of the information of the anti-copy mark and at least one other parameter.

3. Method according to claim 2, wherein at least one other parameter is a timestamp.

4. Method according to claim 1, wherein said value is calculated by means of a subset of the information.

5. Method according to claim 1, **characterized in that** it comprises a step of printing a uniform area and the step of marking the document to form the identification mark comprises a step of emitting light with a laser in the uniform area.

6. Method according to claim 5, **characterized in that** the document marking step comprises a step of detecting the uniform area's arrival in front of said laser.

7. Method according to any one of claims 1 to 6, **characterized in that** a random or pseudorandom number is utilized during the step of generating the identification mark.

8. Method according to any one of claims 1 to 7, **characterized in that** it also comprises a step of invisibly marking the identification mark on said document.

9. Method according to any one of claims 1 to 8, **characterized in that** it also comprises a step of reading the identification mark and a step of verifying the quality of the identification mark read.

10. Method according to any one of claims 1 to 9, **characterized in that** the identification mark is of a textual type, i.e. readable by human beings.

11. Method according to any one of claims 1 to 10, **characterized in that** the identification mark also has an anti-copy property.

12. Device for securing documents, **characterized in that** it comprises:
- a means for marking the document with a pre-printed marking area and an anti-copy mark that is identical for a plurality of documents, the anti-copy mark comprising information;
- a camera and a means for processing at least one image captured by the camera to read an anti-copy mark for obtaining a value representative of at least one portion of the information of the anti-copy mark;
- a means for generating an identification mark that can vary from one document to another and according to said value obtained from reading the anti-copy mark, the generation step being carried out through concatenation, encryption and modulation of at least the value obtained;
- a means for calculating a position in the pre-printed marking area; and
- a means for marking said document, at the calculated position, to form said identification mark on said document.

13. Method for verifying the identification of documents, **characterized in that** it comprises:
- a step of reading an anti-copy mark formed on a document;
- a step of reading, on said document, an identification mark that can vary from one document to another; and
- a step of determining whether the anti-copy mark read and the identification mark read exhibit a predefined relationship, through demodulation, decryption and deconcatenation of the identification mark and comparison with at least one value representative of the anti-copy mark.

14. Device for verifying the identification of documents, **characterized in that** it comprises:
- a camera and a means for processing at least one image captured by the camera to read an anti-copy mark formed on a document and an identification mark that can vary from one document to another; and
- a means for determining whether the anti-copy mark read and the identification mark read exhibit a predefined relationship, through demodulation, decryption and deconcatenation of the identification mark and comparison with at least one value representative of the anti-copy mark.
